# EUROPÄISCHE PATENTSCHRIFT

(11) **EP 2 463 168 B1**
(45) Veröffentlichungstag und Bekanntmachung des Hinweises auf die Patenterteilung: **10.12.2014**
(21) Anmeldenummer: 11008396.1
(22) Anmeldetag: 19.10.2011
(51) Int. Cl.: B60T 13/38, B60T 13/68

(54) **Druckluftversorgungseinrichtung, Verfahren zu deren Steuerung und Standsicherheitsventil**
Compressed air supply device, method for controlling same and stability valve
Dispositif d'alimentation en air comprimé, procédé de commande et soupape de sécurité d'état

(30) Priorität: 10.12.2010 DE 102010054117
(43) Veröffentlichungstag der Anmeldung: 13.06.2012
(73) Patentinhaber: WABCO GmbH, 30453 Hannover (DE)
(72) Erfinder: Diekmeyer, Heinrich, 30890 Barsinghausen (DE); Eggebrecht, Detlev, 30519 Hannover (DE); Feyerabend, Konrad, 30625 Hannover (DE); Ghafari, Mohammad-Reza, 30559 Hannover (DE); Hansen, Yves, 30519 Hannover (DE)

(56) Entgegenhaltungen:
- EP-A1- 1 733 944
- DE-A1-102008 047 632

## Beschreibung

Druckluftversorgungseinrichtung, Verfahren zu deren Steuerung und Standsicherheitsventil

Die Erfindung betrifft eine Druckluftversorgungseinrichtung für eine Druckluftanlage eines Nutzfahrzeugs gemäß dem Oberbegriff des Anspruchs 1. Nutzfahrzeuge sind z. B. Lastkraftwagen und Omnibusse. Die Erfindung betrifft ferner ein Standsicherheitsventil für eine solche Druckluftversorgungseinrichtung gemäß Anspruch 12 sowie ein Verfahren zur Steuerung einer solchen Druckluftversorgungseinrichtung gemäß Anspruch 13.

Die Erfindung betrifft insbesondere eine Druckluftversorgungseinrichtung, die eine so genannte Standsicherheitsfunktion aufweist. Eine solche Standsicherheitsfunktion wird in skandinavischen Ländern eingesetzt und ist auch unter der Bezeichnung Nordic Parking Brake bekannt. Die Standsicherheitsfunktion stellt sicher, dass die Parkbremse nur dann gelöst werden kann, wenn sich der Fahrer im Fahrerhaus eines Nutzfahrzeugs befindet. Sofern in der Bremsanlage ein ausreichender Druck vorhanden ist, ist dies selbstverständlich, denn das Betätigungselement zum Lösen der Parkbremse befindet sich im Fahrerhaus, so dass der Fahrer gezwungenermaßen im Fahrerhaus anwesend sein muss, wodurch er auch in der Lage ist, das Fahrzeug bei gelöster Feststellbremse jederzeit durch Betätigen der Betriebsbremse zum Stehen zu bringen. Eine gefährliche Situation kann aber dann auftreten, wenn der Fahrer den Fahrzeugmotor bei druckloser Bremsanlage startet und damit den Druckaufbau durch den Betrieb des Kompressors erst in Gang setzt. Bei druckloser Bremsanlage wird das Fahrzeug über die Federspeicherzylinder im gebremsten Zustand gehalten. Gibt der Fahrer zu diesem Zeitpunkt durch entsprechende manuelle Betätigung des im Fahrerhaus befindlichen Parkbremsventils den Druckluftpfad von der Druckluftversorgungseinrichtung zu den Federspeicherzylindern frei, so führt dies zunächst auf Grund eines noch nicht ausreichenden Drucks noch nicht zum Lösen der Federspeicherzylinder. Die Parkbremsfunktion bleibt somit zunächst erhalten. Der Fahrer könnte dann von der irrigen Annahme ausgehen, dass insgesamt eine sichere Situation vorliegt. Verlässt der Fahrer nun das Fahrerhaus, um beispielsweise eine vereiste Windschutzscheibe vom Eis zu befreien, so kann dies dazu führen, dass der Druck zum Lösen der Parkbremse in Folge des Auffüllens der Druckluftanlage gerade dann ausreicht, wenn der Fahrer sich nicht im Fahrerhaus befindet. Dies kann erkennbar gefährliche Folgen haben.

Um dieser Problematik zu begegnen, wird in der DE 103 41 723 A1 vorgeschlagen, eine Luftaufbereitungsanlage entsprechend zu erweitern, und zwar in der Art, dass ein zusätzliches Magnetventil vorgesehen wird, mit dem durch elektrische Steuerung ein pneumatisches Drucksignal erzeugt wird, über das ein in der Mehrkreisschutzeinrichtung befindliches Überströmventil, an das wiederum das manuell zu betätigende Parkbremsventil angeschlossen ist, gesperrt wird. Durch die Sperrung des Überströmventils wird eine Druckluftzufuhr zu dem Parkbremsventil und damit zu den Federspeicherkammern verhindert.

Die dort vorgeschlagene Lösung erfordert allerdings die Hinzufügung eines zusätzlichen Magnetventils, was sich ungünstig auf die Kosten und das Gewicht der Luftaufbereitungsanlage auswirkt. Außerdem erfordert die dort vorgeschlagene Lösung ein aktives Eingreifen der Elektronik zur Betätigung des Magnetventils, um die Standsicherheit zu gewährleisten. Ein Stromausfall kann also dazu führen, dass - vom Fahrer unerkannt - die Standsicherheitfunktion nicht gewährleistet ist.

In der EP 1 733 944 A1 wird ein elektronisches Ventilsystem einer Handbremse für Fahrzeuge mit Druckluftbremse beschrieben.

Der Erfindung liegt daher die Aufgabe zu Grunde, eine Druckluftversorgungseinrichtung für eine Druckluftanlage eines Nutzfahrzeugs anzugeben, in der eine Standsicherheitsfunktion mit geringerem Aufwand vorgesehen werden kann. Eine weitere Aufgabe besteht darin, ein Verfahren zur Steuerung einer solchen Druckluftversorgungseinrichtung anzugeben.

Diese Aufgabe wird durch die in den Ansprüchen 1, 12 und 13 angegebene

Erfindung gelöst. Die Unteransprüche geben vorteilhafte Ausgestaltungen der Erfindung an.

Gemäß der Erfindung weist die Druckluftversorgungseinrichtung wenigstens eine Mehrkreisschutzeinrichtung und ein Standsicherheitsventil auf. Das Standsicherheitsventil kann als von der Mehrkreisschutzeinrichtung separates Ventil oder als in die Mehrkreisschutzeinrichtung integriertes Ventil ausgeführt sein. Vorteilhaft ist insbesondere eine Ausführung des Standsicherheitsventils als Überströmventil, d. h. entsprechend dem Vorschlag aus DE 103 41 723 A1. In diesem Fall hat das kombinierte Überström/Standsicherheits-Ventil zwei Funktionen, nämlich einmal die Funktion eines Überströmventils, und zusätzlich die Funktion des Standsicherheitsventils.

Erfindungsgemäß wird ein in einer Mehrkreisschutzeinrichtung bekannter Bauart bereits vorhandenes elektrisch steuerbares erstes Magnetventil herangezogen, das zur pneumatischen Steuerung einer ersten Druckluftversorgungsfunktion eingerichtet ist. Die erste Druckluftversorgungsfunktion kann beispielsweise die Steuerung des Druckluftkompressors oder die Steuerung der Regenerationsfunktion sein, jedoch nicht die Standsicherheitsfunktion. Vorteilhaft wird das von diesem ersten Magnetventil abgegebene Drucksignal zusätzlich für die Standsicherheitsfunktion herangezogen, indem ein erster Druckluftsteuereingang des Standsicherheitsventils mit dem pneumatischen Druckluftausgang des ersten Magnetventils der Mehrkreisschutzeinrichtung verbunden ist. Hierdurch hat das erste Magnetventil eine Doppelfunktion, nämlich einerseits die Steuerung der ersten Druckluftversorgungsfunktion und zweitens die Steuerung der Standsicherheitsfunktion. Dies erlaubt eine besonders Kosten sparende Realisierung der Standsicherheitsfunktion, da kein wesentlicher apparativer Zusatzaufwand für die Standsicherheitsfunktion erforderlich ist. Das vorhandene erste Magnetventil kann für die Standsicherheitsfunktion mit verwendet werden.

Durch eine solche Integration der Standsicherheitsfunktion ergeben sich neben geringeren Materialkosten weitere Vorteile wie eine höhere Geräterobustheit, geringerer Bauraumbedarf, geringere Prozesskosten und ein verringerter Montageaufwand im Nutzfahrzeug.

Die Mehrkreisschutzeinrichtung kann mit einer Lufttrocknungseinrichtung einstückig oder als integriertes Gerät ausgebildet sein. Zusätzlich kann vorgesehen sein, dass die Mehrkreisschutzeinrichtung eine integrierte Steuerelektronik aufweist. Die Mehrkreisschutzeinrichtung kann z.B. als elektronisch gesteuerte Luftaufbereitungseinrichtung ausgebildet sein. Die elektronisch gesteuerte Luftaufbereitungseinrichtung kann einen Lufttrockner und ein Mehrkreisschutzventil aufweisen. Das Standsicherheitsventil kann an die Mehrkreisschutzeinrichtung anflanschbar oder darin integriert ausgebildet sein. In einer weiteren Ausführungsform kann das Standsicherheitsventil an den Lufttrockner anflanschbar oder darin integriert ausgebildet sein. In einer weiteren Ausführungsform kann das Standsicherheitsventil an die Luftaufbereitung anflanschbar oder darin integriert ausgebildet sein.

Gemäß einer vorteilhaften Weiterbildung der Erfindung enthält die Mehrkreisschutzeinrichtung wenigstens ein erstes Überströmventil. Das Standsicherheitsventil ist in einem Druckluftpfad zwischen dem ersten Überströmventil und dem Parkbremsventil angeordnet. Das Standsicherheitsventil ist vorteilhaft als von dem ersten Überströmventil, an das das Standsicherheitsventil angeschlossen ist, separates Ventil ausgebildet. Dies hat den Vorteil, dass das erste Überströmventil nicht für die Standsicherheitsfunktion manipuliert werden muss. Hierdurch kann das erste Überströmventil auf seine eigentliche Funktion, ab einem bestimmten Öffnungsdruck zu öffnen und Druckluft in einen angeschlossenen Druckluftkreis strömen zu lassen, optimiert werden. Das Standsicherheitsventil kann dann separat auf seine Funktion für die Standsicherheitsfunktion optimiert werden. Ein weiterer Vorteil ist, dass das Standsicherheitsventil als separates Bauteil z. B. auch außerhalb der Mehrkreisschutzeinrichtung vorgesehen werden kann. In diesem kann die Mehrkreisschutzeinrichtung einen zusätzlichen Ausgangsanschluss aufweisen, an dem das von dem ersten Magnetventil abgegebene Drucksignal abgenommen werden kann und dem ersten Druckluftsteuereingang des Standsicherheitsventils zugeführt werden kann. Auf diese Weise kann eine universelle Mehrkreisschutzeinrichtung hergestellt werden, die durch Ergänzung eines Standsicherheitsventils um die Standsicherheitsfunktion erweitert werden kann.

Gemäß einer vorteilhaften Weiterbildung der Erfindung weist die Druckluftversorgungseinrichtung folgende Merkmale auf:
a) die Mehrkreisschutzeinrichtung weist wenigstens einen der folgenden Druckluftausgangsanschlüsse auf:
   - erster Betriebsbremskreis-Druckluftausgangsanschluss, der zum Anschluss eines ersten Betriebsbremskreises des Nutzfahrzeugs eingerichtet ist,
   - zweiter Betriebsbremskreis-Druckluftausgangsanschluss, der zum Anschluss eines zweiten Betriebsbremskreises des Nutzfahrzeugs eingerichtet ist,
   - Anhänger-Druckluftausgangsanschluss, der zum Anschluss eines Druckluftkreises eines Anhängers des Nutzfahrzeugs eingerichtet ist,
b) wenigstens einer dieser Druckluftausgangsanschlüsse ist über das in der Mehrkreisschutzeinrichtung enthaltene erste Überströmventil, an das das Standsicherheitsventil angeschlossen ist, mit einer Lufttrocknungseinrichtung verbunden,
c) die Lufttrocknungseinrichtung weist einen Druckluftzufuhranschluss auf, der dazu eingerichtet ist, mit einem Druckluftkompressor verbunden zu werden.

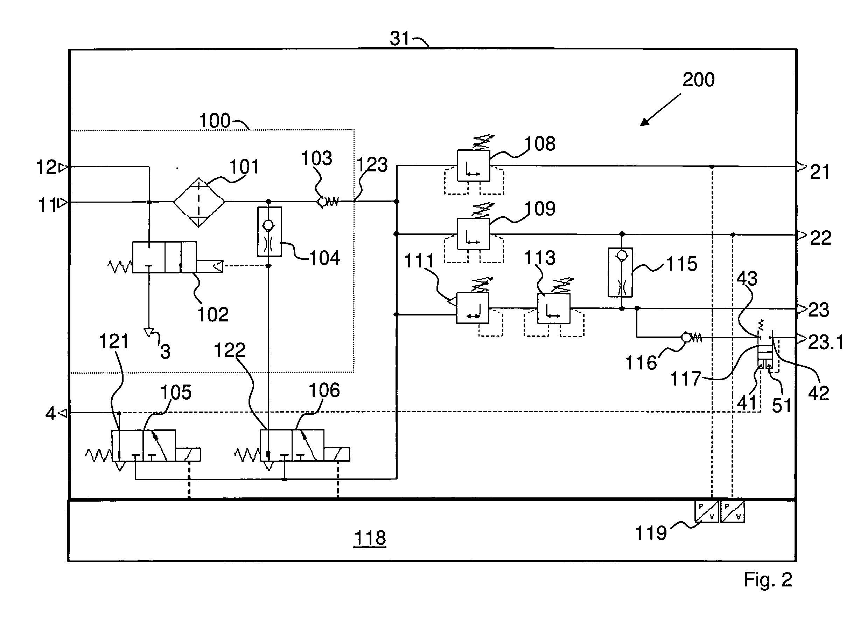

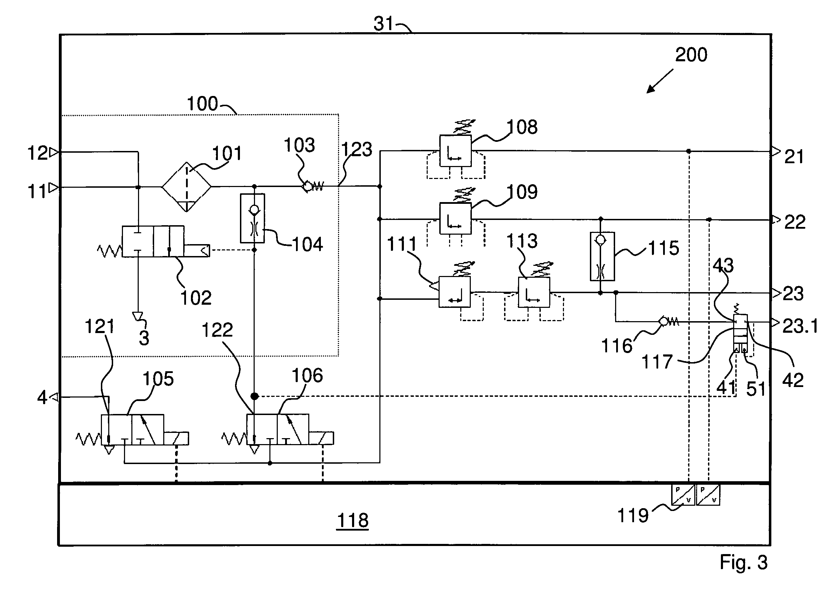

Gemäß einer vorteilhaften Weiterbildung der Erfindung ist das Standsicherheitsventil an einem Anhänger-Druckluftausgangsanschluss, der zum Anschluss eines Druckluftkreises eines Anhängers des Nutzfahrzeugs eingerichtet ist, angeschlossen, z. B. an den Kreis III (entsprechend Anhänger-Druckluftausgangsanschluss 23 in den Figuren 2 und 3).

Gemäß einer vorteilhaften Weiterbildung der Erfindung ist das Standsicherheitsventil nicht als Überströmventil ausgebildet.

Gemäß einer vorteilhaften Weiterbildung der Erfindung ist das Standsicherheitsventil als 2/2-Wegeventil oder als 3/2-Wegeventil ausgebildet. Dies erlaubt eine einfache und kostengünstige Realisierung des Standsicherheitsventils, auch als separates Ventil. Insbesondere bei Integration des Standsicherheitsventils in die Mehrkreisschutzeinrichtung ergibt sich nur geringer Mehraufwand, da ein solches Wegeventil mit einfachen Mitteln in einem Ventilblock an der Mehrkreisschutzeinrichtung ergänzt werden kann.

Gemäß einer vorteilhaften Weiterbildung der Erfindung ist das Standsicherheitsventil bei pneumatischer Betätigung an dem ersten Druckluftsteuereingang geöffnet oder wird geöffnet, wodurch ein Druckluft-Ausgangsanschluss des Standsicherheitsventils mit einem Druckluft-Eingangsanschluss des Standsicherheitsventils verbunden ist.

Gemäß einer vorteilhaften Weiterbildung der Erfindung ist das Standsicherheitsventil über wenigstens einen zweiten Druckluftsteuereingang pneumatisch betätigbar. Der zweite Druckluftsteuereingang ist zum Verbinden mit einer zum Parkbremsventil führenden Druckluftleitung eingerichtet. Über den zweiten Druckluftsteuereingang kann eine Selbsthaltefunktion des Standsicherheitsventils realisiert werden, derart, dass das Standsicherheitsventil nach erstmaliger Betätigung über den ersten Druckluftsteuereingang, durch die das Standsicherheitsventil in seine Durchlassstellung gebracht wird, fortan durch den über das Parkbremsventil an dem zweiten Druckluftsteuereingang anstehenden Druck in der offenen Stellung gehalten wird. Erst bei Drucklosigkeit oder zu geringem Druck an dem ersten und dem zweiten Druckluftsteuereingang fällt das Standsicherheitsventil in seine unbetätigte, geschlossene Stellung zurück. Dies hat den Vorteil, dass zum dauerhaften Schalten des Standsicherheitsventils in die geöffnete Stellung nur ein relativ kurzer Druckimpuls an dem ersten Druckluftsteuereingang erforderlich ist. Dies hat wiederum den Vorteil, dass an die Signalform und insbesondere an die Einschaltdauer des Drucksignals von dem ersten Magnetventil keine besonderen Anforderungen zu stellen sind, so dass die eigentlich von dem ersten Magnetventil gesteuerte erste Druckluftversorgungsfunktion nicht in besonderem Maße modifiziert werden muss.

Gemäß einer vorteilhaften Weiterbildung der Erfindung weist das Standsicherheitsventil einen zum Anschließen des Parkbremsventils vorgesehenen Druckluft-Ausgangsanschluss auf, der zugleich der zweite Druckluftsteuereingang ist. Dies hat den Vorteil, dass für den zweiten Druckluftsteuereingang kein eigener Anschluss an dem Standsicherheitsventil vorgesehen werden muss, sondern der für das Anschließen des Parkbremsventils ohnehin vorhandene Druckluft-Ausgangsanschluss für die Funktion als zweiter Druckluftsteuereingang mitverwendet werden kann. Auf diese Weise kann ein Standsicherheitsventil mit nur drei Anschlüssen realisiert werden. Das Geöffnet-Halten des Standsicherheitsventils kann z.B. über eine mit dem Druckluft-Ausgangsanschluss in Verbindung stehende Steuerfläche in dem Standsicherheitsventil realisiert werden.

Gemäß einer vorteilhaften Weiterbildung der Erfindung ist das erste Magnetventil zur Steuerung eines Druckluftkompressors oder zur Steuerung wenigstens eines Teils einer Regenerationsfunktion der Druckluftanlage eingerichtet. Im Falle der Steuerung des Druckluftkompressors wird dieser über das Drucksignal zu- und abgeschaltet, bzw. auf Druckluftförderung oder Beendigung der Druckluftförderung geschaltet. In einer vorteilhaften Weiterbildung der Erfindung wird der Druckluftkompressor durch den von dem ersten Magnetventil abgegebenen Druck abgeschaltet.

Im Fall der Steuerung der Regenerationsfunktion wird über das Drucksignal die Regeneration eines Trocknungsmittelbehälters der Lufttrocknungseinrichtung gesteuert, indem Druckluft aus einem Druckluftkreis, z. B. einem Druckluftbehälter des ersten und/oder des zweiten Betriebsbremskreises, durch das Trocknungsmittel hindurch in die Atmosphäre entlüftet wird. Das erste Magnetventil kann hierbei für die gesamte Steuerung der Regenerationsfunktion sorgen. Es ist auch möglich, dass das erste Magnetventil nur eine Teilfunktion der Regenerationsfunktion steuert, beispielsweise eine Rückströmung von Luft aus einem Druckluft-Vorratsbehälter über eine Blende in den Trocknungsmittelbehälter realisiert, aber nicht die Regenerationseinrichtung zur Verbindung mit der Atmosphäre öffnet. In einer vorteilhaften Weiterbildung der Erfindung wird die Regenerationsfunktion bzw. zumindest ein Teil davon durch den von dem ersten Magnetventil abgegebenen Druck aktiviert.

Gemäß einer vorteilhaften Weiterbildung der Erfindung kann das Drucksignal, das dem ersten Druckluftsteuereingang des Standsicherheitsventils zugeführt ist, auch über eine Kombination von Steuersignalen verschiedener Magnetventile der Mehrkreisschutzeinrichtung erzeugt werden, z. B. in dem Zustand "Kompressor fördert" (entsprechend kein Drucksignal von einem Magnetventil zur Steuerung des Druckluftkompressors) und "Regenerationsfunktion aktiviert" (entsprechend einem Drucksignal von einem Magnetventil zur Steuerung der Regenerationsfunktion). Auch andere Kombinationen sind vorteilhaft realisierbar. Die entsprechende Verknüpfung zwischen den Drucksignalen kann z. B. über ein geeignetes Ventil oder über eine geeignete Anordnung druckwirksamer Flächen im Standsicherheitsventil erfolgen. So kann z.B. vorgesehen sein, dass ein Steuersignal direkt auf das Standsicherheitsventil in Richtung Öffnen wirkt und das andere Steuersignal auf der gegenüberliegenden Seite des Standsicherheitsventils in Richtung Schließen wirkt.

Gemäß einer vorteilhaften Weiterbildung der Erfindung ist das Standsicherheitsventil bei pneumatischer Betätigung an dem zweiten Druckluftsteuereingang geöffnet oder wird dadurch geöffnet. Hierdurch ist ein Druckluft-Ausgangsanschluss des Standsicherheitsventils mit einem Druckluft-Eingangsanschluss des Standsicherheitsventils verbunden.

Gemäß einer vorteilhaften Weiterbildung der Erfindung ist das Standsicherheitsventil bei Drucklosigkeit oder zu geringem Druck an dem ersten und dem zweiten Druckluftsteuereingang geschlossen oder wird dadurch geschlossen. Hierdurch ist ein Druckluft-Ausgangsanschluss des Standsicherheitsventils gegenüber einem Druckluft-Eingangsanschluss des Standsicherheitsventils abgesperrt. Hierdurch ist wiederum das Parkbremsventil von einer Druckluftzufuhr abgesperrt. Das Standsicherheitsventil ist vorteilhaft als so genanntes "Normal Closed"-Ventil ausgebildet. Das Überführen des Standsicherheitsventils in die geschlossene Stellung kann z. B. durch eine Rückstellfeder bewirkt werden.

Die zuvor genannten Ausgestaltungen des Standsicherheitsventils haben den Vorteil, dass auch in besonderen Betriebssituationen der Druckluftversorgungseinrichtung ein sicherer Zustand eingenommen wird, in dem das Parkbremsventil von einer Druckluftzufuhr abgesperrt und somit die Parkbremse sich nicht unbeabsichtigt löst. Auch bei Stromausfall wird ein sicherer Zustand eingenommen, da das erste Magnetventil dann nicht betätigt werden kann. Ohne Betätigung des ersten Magnetventils kann das Standsicherheitsventil kein Drucksignal erhalten, durch das das Standsicherheitsventil in die geöffnete Stellung gebracht wird.

Ein vorteilhaftes Standsicherheitsventil kann daher gemäß den Merkmalen des Anspruchs 12 ausgestaltet werden.

Die Erfindung betrifft ferner Verfahren zur Steuerung einer Druckluftversorgungseinrichtung einer Druckluftanlage eines Nutzfahrzeugs der zuvor beschriebenen Art. Hierbei ist vorgesehen, dass der erste Druckluftsteuereingang des Standsicherheitsventils durch das erste Magnetventil der Mehrkreisschutzeinrichtung gesteuert wird.

In einer ersten Ausgestaltung erfolgt die Steuerung über ein erstes Magnetventil zur Steuerung eines Druckluftkompressors. Hierbei ist vorgesehen, dass der Druckluftkompressor Druckluft in die Druckluftanlage fördert, solange von dem ersten Magnetventil kein Drucksignal abgegeben wird. Wird das Drucksignal abgegeben, wird die Förderung durch den Druckluftkompressor unterbrochen. Gemäß einem vorteilhaften Verfahren zur Steuerung einer Druckluftversorgungseinrichtung der zuvor beschriebenen Art ist vorgesehen, dass der Druckluftkompressor zusammen mit dem Standsicherheitsventil das Drucksignal erhält, wenn der Druck in dem ersten und/oder dem zweiten Betriebsbremskreis oberhalb eines Mindestwerts ist und anhand eines Fahrzeugsignals erkannt wird, dass sich eine Person am Fahrerarbeitsplatz aufhält, wobei durch das Drucksignal der Druckluftkompressor abgeschaltet wird und das Standsicherheitsventil auf Durchlass geschaltet wird. Ebenfalls kann vorgesehen sein, dass der Druckluftkompressor zusammen mit dem Standsicherheitsventil solange kein Drucksignal erhält, bis der Druck in dem ersten und/oder dem zweiten Betriebsbremskreis oberhalb eines Mindestwerts ist und anhand eines Fahrzeugsignals erkannt wird, dass sich eine Person am Fahrerarbeitsplatz aufhält, wobei durch das Drucksignal der Druckluftkompressor abgeschaltet wird und das Standsicherheitsventil auf Durchlass geschaltet wird.

Ergänzend kann vorgesehen sein, dass ein ggf. zuvor durch den laufenden Druckluftkompressor erzeugter Überdruck in der Druckluftanlage durch Aktivierung einer Regenerationsfunktion der Druckluftanlage abgebaut wird, zumindest solange nicht das Drucksignal an den Druckluftkompressor abgegeben werden kann, durch den dieser abgeschaltet wird, weil die damit gekoppelte Bedingung für die Deaktivierung der Standsicherheitsfunktion noch nicht erfüllt ist. Insbesondere kann bei Erreichen des Abschaltdrucks eine Druckregelung in der Druckluftanlage durch Betätigung eines Magnetventils für die Regenerationsfunktion erfolgen. Hierdurch wird Druckluft in die Atmosphäre entlüftet, z. B. durch Öffnen eines Entlüftungsventils (so genanntes "line-unloading"). Hiermit wird dem Fall Rechnung getragen, dass die Druckluftanlage den Abschaltdruck erreicht, ohne dass die Anwesenheit des Fahrers in dem Nutzfahrzeug erkannt wird. Somit kann der durch den laufenden Druckluftkompressor erzeugte Überdruck in der Druckluftanlage durch Aktivierung einer Regenerationsfunktion der Druckluftanlage abgebaut werden.

Gemäß einer vorteilhaften Weiterbildung der Erfindung kann durch eine Steuerelektronik zunächst geprüft werden, ob der gewünschte Systemdruck in dem ersten und/oder dem zweiten Betriebsbremskreis vorhanden ist. Die Steuerelektronik kann dazu eingerichtet sein, erst bei ausreichendem Systemdruck ein Abschalten des Kompressors zu bewirken. Hierdurch kann ein zu häufiges Abschalten des Kompressors vermieden werden.

In einer zweiten Ausgestaltung kann die Standsicherheitsfunktion auch mit einem ersten Magnetventil, das die Steuerung der Regenerationsfunktion oder wenigstens eines Teils davon vornimmt, gekoppelt sein. Ein Verfahren zur Steuerung einer Druckluftversorgungseinrichtung dieser Art sieht daher vor, dass eine Regenerationseinrichtung zusammen mit dem Standsicherheitsventil ein Drucksignal erhält, wenn der Druck in dem ersten und/oder dem zweiten Betriebsbremskreis oberhalb eines Mindestwerts ist und anhand eines Fahrzeugsignals erkannt wird, dass sich eine Person am Fahrerarbeitsplatz aufhält, wobei durch das Drucksignal wenigstens ein Teil einer Regenerationsfunktion der Druckluftanlage aktiviert wird und das Standsicherheitsventil auf Durchlass geschaltet wird. Ebenfalls kann vorgesehen sein, dass eine Regenerationseinrichtung zusammen mit dem Standsicherheitsventil solange kein Drucksignal erhält, bis der Druck in dem ersten und/oder dem zweiten Betriebsbremskreis oberhalb eines Mindestwerts ist und anhand eines Fahrzeugsignals erkannt wird, dass sich eine Person am Fahrerarbeitsplatz aufhält, wobei durch das Drucksignal wenigstens ein Teil einer Regenerationsfunktion der Druckluftanlage aktiviert wird und das Standsicherheitsventil auf Durchlass geschaltet wird.

Gemäß einer vorteilhaften Weiterbildung der zuvor angegebenen Verfahren kann vorgesehen sein, dass beim Fahrzeugstart der Druck in dem ersten und/oder dem zweiten Betriebsbremskreis geprüft wird und ein Verfahren der zuvor angegebenen Art nur durchgeführt wird, wenn der festgestellte Druck so gering ist, dass davon ausgegangen werden muss, dass sich das Standsicherheitsventil in seiner geschlossenen Stellung befindet. Ebenso kann vorgesehen sein, dass das Drucksignal des ersten Magnetventils erst erzeugt wird, wenn der Druck in dem ersten und/oder dem zweiten Betriebsbremskreis von einem Wert unterhalb eines Mindestwerts auf einen Wert oberhalb eines Mindestwerts angestiegen ist und anhand des Fahrzeugsignals erkannt wird, dass sich eine Person am Fahrerarbeitsplatz aufhält.

In den beschriebenen Varianten kann z. B. das Fahrzeugssignal, anhand dessen erkannt wird, dass sich eine Person - in der Regel der Fahrer - am Fahrerarbeitsplatz aufhält, das Signal eines im Fahrzeug vorhandenen Schalters oder Gebers sein, z. B. ein Sitzplatzbelegungssensor am Fahrersitz, ein Bremslichtschalter oder ein Blinkerschalter, zumindest wenn dieser betätigt oder gelöst wird, oder jeder andere Signalgeber im Bereich des Fahrerarbeitsplatzes. Durch das Fahrzeugsignal kann sichergestellt werden, dass sich eine Person im Inneren des Fahrzeugs, und zwar dort, wo die Bedienelemente sind, aufhält, die im Gefahrenfall eingreifen kann.

Vorteilhaft kann vorgesehen sein, dass das Standsicherheitsventil für Einsatzfälle der Druckluftversorgungseinrichtung, in denen keine Standsicherheitsfunktion benötigt ist, durch einen Bypass ersetzt wird, der einen permanenten Druckluft-Durchfluss erlaubt und zusätzlich die Leitungen zu dem ersten und dem zweiten Druckluftsteuereingang des Standsicherheitsventils abdichtet. Alternativ können die entsprechenden Kammern des Standsicherheitsventils in solchen Fällen verkugelt werden, d.h. die Kammern oder Zuleitungen dazu können mit einer Kugel verschlossen werden. Eine weitere Alternative für solche Einsatzfälle besteht darin, wenigstens eine der Druckluftsteuereingänge des Standsicherheitsventils permanent mit Druckluft zu versorgen.

Die Erfindung wird nachfolgend anhand von Ausführungsbeispielen unter Verwendung von Zeichnungen näher erläutert.

Es zeigen
- Figur 1: - eine Druckluftanlage eines Nutzfahrzeugs und
- Figur 2: - eine erste Ausführungsform einer Druckluftversorgungseinrichtung und
- Figur 3: - eine zweite Ausführungsform einer Druckluftversorgungseinrichtung und
- Figur 4: - eine erste Ausführungsform eines Standsicherheitsventils und
- Figur 5: - eine zweite Ausführungsform eines Standsicherheitsventils.

In den Figuren werden gleiche Bezugszeichen für einander entsprechende Elemente verwendet.

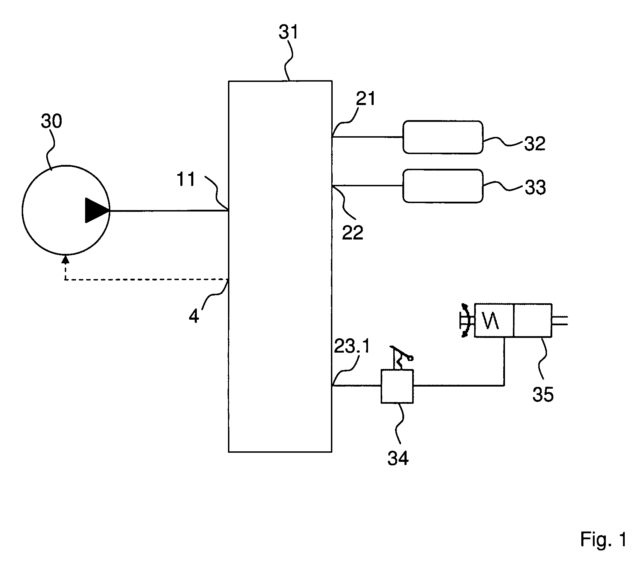

Die Figur 1 zeigt den grundsätzlichen Aufbau einer Druckluftanlage eines Nutzfahrzeugs. Dargestellt ist ein Druckluftkompressor 30, der mit einer Druckluftversorgungseinrichtung 31 verbunden ist.

Die Druckluftversorgungseinrichtung 31 weist folgende externe Anschlüsse auf:
11: Anschluss für den Druckluftkompressor 30, nachfolgend Druckluftzufuhranschluss genannt
4: Kompressorsteuerungs-Steuerausgang.
21: erster Betriebsbremskreis-Druckluftausgangsanschluss
22: zweiter Betriebsbremskreis-Druckluftausgangsanschluss
23.1: Parkbremsventil-Druckluftausgangsanschluss

An die Druckluftversorgungseinrichtung 31 sind verschiedene Druckluftkreise angeschlossen, wie z. B. ein erster Betriebsbremskreis 32 und ein zweiter Betriebsbremskreis 33 sowie ein Druckluftkreis für die Parkbremsfunktion, an den über ein manuell zu betätigendes Parkbremsventil 34 die Federspeicherkammern verschiedener Federspeicherzylinder 35 der Bremsanlage angeschlossen sind. Der Druckluftkompressor 30 ist über ein durch den Kompressorsteuerungs-Steuerausgang 4 der Druckluftversorgungseinrichtung 31 abgegebenes Drucksignal zu- und abschaltbar, d. h. von einem Druckluftförderbetrieb in einen neutralen Betrieb, in dem keine Druckluft gefördert wird, umschaltbar. Dabei wird der Druckluftkompressor 30 abgeschaltet, wenn am Kompressorsteuerungs-Steuerausgang 4 ein ausreichend hoher Druck ansteht. Andernfalls fördert der Druckluftkompressor 30 Druckluft über den Druckluftzufuhranschluss 11 der Druckluftversorgungseinrichtung 31 in die Druckluftanlage.

Die Figur 2 zeigt eine erste Ausführungsform der Druckluftversorgungseinrichtung 31 mit weiteren Details. Die Druckluftversorgungseinrichtung 31 weist eine Lufttrocknungseinrichtung 100 sowie eine Mehrkreisschutzeinrichtung 200 auf. Des Weiteren weist die Druckluftversorgungseinrichtung 31 eine Steuerelektronik 118 auf, die zur Steuerung verschiedener Funktionen der Druckluftversorgungseinrichtung vorgesehen ist.

Die Druckluftversorgungseinrichtung 31 weist zudem folgende weitere Anschlüsse auf:
12: Externer Befüllungsanschluss für eine Druckluftbefüllung der Druckluftanlage.
23: Anhänger-Druckluftausgangsanschluss

Die Lufttrocknungseinrichtung 100 weist einen mit dem Druckluftzufuhranschluss 11 verbundenen Trockenmittelbehälter 101 auf, z. B. in Form einer Wechselkartusche. An den Druckluftzufuhranschluss 11 ist zudem eine Regenerationseinrichtung 102 in einer Ausgestaltung als Entleerungsventil angeschlossen, das als druckluftgesteuertes 2/2-Wegeventil ausgeführt sein kann. Über die Regenerationseinrichtung 102 kann der Trockenmittelbehälter 101 Kompressoranschluss-seitig mit einem Entlüftungsanschluss 3 verbunden werden, der mit der Atmosphäre verbunden ist. Auf der dem Druckluftkompressor 30 abgewandten Seite ist an dem Trockenmittelbehälter 101 ein federbelastetes Rückschlagventil 103 sowie ein Drosselrückschlagventil 104 angeschlossen. Über das federbelastete Rückschlagventil 103 wird Druckluft an einem Lufttrocknungseinrichtungs-Druckluftausgang 123 bereitgestellt. Die Regenerationseinrichtung 102 ist mit ihrem Druckluftsteuereingang mit dem Drosselrückschlagventil 104 verbunden, wobei dieser Verbindungspunkt wiederum mit einem Magnetventil 106 verbunden ist.

Die Mehrkreisschutzeinrichtung 200 weist ein erstes Überströmventil 113, ein zweites Überströmventil 108 und ein drittes Überströmventil 109 auf. Über die Überströmventile werden der erste Betriebsbremskreis-Druckluftausgangsanschluss 21, der zweite Betriebsbremskreis-Druckluftausgangsanschluss 22 und der Anhänger-Druckluftausgangsanschluss 23 nach Art eines Mehrkreisschutzventils voneinander druckluftmäßig entkoppelt. Zusätzlich ist zwischen dem Lufttrocknungseinrichtungs-Druckluftausgang 123 und dem ersten Überströmventil 113 ein optionales Druckbegrenzungsventil 111 angeordnet, das bewirkt, dass an dem ersten Betriebsbremskreis-Druckluftausgangsanschluss 21 und dem zweiten Betriebsbremskreis-Druckluftausgangsanschluss 22 ein höheres Druckniveau ausgesteuert werden kann (z.B. 12 bar) als am Anhänger-Druckluftausgangsanschluss 23 (z.B. 8,5 bar). Ferner ist der Anhänger-Druckluftausgangsanschluss 23 über ein Drosselrückschlagventil 115 mit dem zweiten Betriebsbremskreis-Druckluftausgangsanschluss 22 verbunden, um eine sog. Bleed-Back-Funktion zu realisieren. Durch die Bleed-Back-Funktion ist sichergestellt, dass bei Druckverlusten am zweiten Betriebsbremskreis-Druckluftausgangsanschluss 22 der Druck am Anhänger-Druckluftausgangsanschluss 23 nicht höher ist als der Druck am zweiten Betriebsbremskreis-Druckluftausgangsanschluss 22. Das zweite Überströmventil 108, das dritte Überströmventil 109 und das Druckbegrenzungsventil 111 sind eingangsseitig mit dem Lufttrocknungseinrichtungs-Druckluftausgang 123 verbunden.

Schließlich ist ein Standsicherheitsventil 117 vorgesehen, das ausgangsseitig mit dem Parkbremsventil-Druckluftausgangsanschluss 23.1 verbunden ist. Auf seiner anderen Seite ist das Standsicherheitsventil 117 über ein federbelastetes Rückschlagventil 116 an das erste Überströmventil 113 angeschlossen.

Zur Steuerung verschiedener Funktionen der Druckluftanlage weist die Druckluftversorgungseinrichtung 31 noch ein Magnetventil 105 zur Steuerung des Druckluftkompressors 30 und das Magnetventil 106 zur Steuerung der Regenerationsfunktion der Druckluftanlage auf. Ein pneumatischer Druckluftausgang 121 des Magnetventils 105 ist über eine Druckluftleitung über den Kompressorsteuerungs-Steuerausgang 4 mit dem Steuereingang des Druckluftkompressors 30 verbunden. Ein pneumatischer Druckluftausgang 122 des Magnetventils 106 ist mit dem Drosselrückschlagventil 104 sowie dem Druckluftsteuereingang der Regenerationseinrichtung 102 verbunden. Beide Magnetventile 105, 106 sind auf ihrer anderen Anschlussseite mit dem Lufttrocknungseinrichtungs-Druckluftausgang 123 verbunden.

Für die Steuerung des Druckluftkompressors 30 betätigt die Steuerelektronik 118 über ein elektrisches Signal das Magnetventil 105 derart, dass bei ausreichendem Druck in der Druckluftanlage der Druckluftkompressor über eine Druckbeaufschlagung durch das Magnetventil 105 abgeschaltet wird und bei erneutem Druckluftbedarf der Druckluftkompressor zugeschaltet wird, in dem die Steuerelektronik 118 das Magnetventil 105 derart betätigt, dass über das Magnetventil 105 keine Druckbeaufschlagung des Druckluftkompressors erfolgt. Die Steuerelektronik weist Drucksensoren 119 auf, über die der vorhandene Luftdruck in den mit dem ersten Betriebsbremskreis-Druckluftausgangsanschluss 21 und dem zweiten Betriebsbremskreis-Druckluftausgangsanschluss 22 verbundenen Druckluftkreisen erfasst wird. Für die Steuerung der Regenerationsfunktion steuert die Steuerelektronik 118 das Magnetventil 106 derart, dass bei einem Regenerationsbedarf das Magnetventil 106 durch ein elektrisches Steuersignal betätigt wird. Hierdurch wird ein Entlüftungspfad freigegeben, über den von dem ersten und dem zweiten Betriebsbremskreis 32, 33 Druckluft zurückströmt durch das Magnetventil 106, das Drosselrückschlagventil 104 und den Trockenmittelbehälter 101. Die Druckluft kann dann durch die in Folge der Druckbeaufschlagung des Druckluftsteuereingangs der Regenerationseinrichtung 102 geöffnete Regenerationseinrichtung 102 zu dem Entlüftungsanschluss 3 und damit in die Atmosphäre gelangen. Typischerweise wird während der Regeneration der Druckluftkompressor 30 durch Betätigung des Magnetventils 105 abgeschaltet. Bleibt der Druckluftkompressor 30 eingeschaltet, so wird die vom der Druckluftkompressor 30 zugeführte Druckluft über die Regenerationseinrichtung 102 in die Atmosphäre abgeführt, so dass es zu keiner weiteren Druckerhöhung an dem ersten Betriebsbremskreis-Druckluftausgangsanschluss 21 und dem zweiten Betriebsbremskreis-Druckluftausgangsanschluss 22 kommt.

Gemäß Figur 2 ist ein erster Druckluftsteuereingang 41 des Standsicherheitsventils 117 mit dem pneumatischen Druckluftausgang 121 des Magnetventils 105 zur Steuerung des Druckluftkompressors 30 verbunden. Das Magnetventil 105 hat in diesem Fall somit die Funktion des anspruchsgemäßen ersten Magnetventils. Ein zweiter Druckluftsteuereingang 51 des Standsicherheitsventils 117 ist direkt mit dem Parkbremsventil-Druckluftausgangsanschluss 23.1 verbunden. Durch Druckbeaufschlagung des ersten Druckluftsteuereingangs 41 kann das Standsicherheitsventil 117 in eine geöffnete Stellung gebracht werden, in der der Parkbremsventil-Druckluftausgangsanschluss 23.1 mit dem federbelasteten Rückschlagventil 116 verbunden ist. Das Standsicherheitsventil 117 schließt durch Federkraft selbsttätig bei Drucklosigkeit oder zu geringem Druck an seinen Druckluftsteuereingängen 41, 51 bzw. an einem Druckluft-Ausgangsanschluss 42. In der geschlossenen Stellung ist der Parkbremsventil-Druckluftausgangsanschluss 23.1 gegenüber dem federbelasteten Rückschlagventil 116 abgesperrt. Das Standsicherheitsventil 117 öffnet nicht, wenn nur an einem mit dem federbelasteten Rückschlagventil 116 verbundenen Druckluft-Eingangsanschluss 43 ein Druck anliegt. Solange am zweiten Druckluftsteuereingang 51 ein ausreichend hoher Druck vorliegt, bleibt das Standsicherheitsventil 117 in seiner geöffneten Stellung.

Die Figur 3 zeigt eine zweite Ausführungsform der Druckluftversorgungseinrichtung 31, die im Wesentlichen der Ausführungsform gemäß Figur 2 entspricht. Im Unterschied zur Figur 2 ist bei der Figur 3 vorgesehen, dass der erste Druckluftsteuereingang 41 des Standsicherheitsventils 117 mit dem pneumatischen Druckluftausgang 122 des Magnetventils 106 für die Steuerung der Regenerationsfunktion verbunden ist. Das Magnetventil 106 hat in diesem Fall somit die Funktion des anspruchsgemäßen ersten Magnetventils.

Die Steuerung des Standsicherheitsventils 117 über das Magnetventil 105 oder das Magnetventil 106 kann gemäß den oben beschriebenen Verfahren durchgeführt werden.

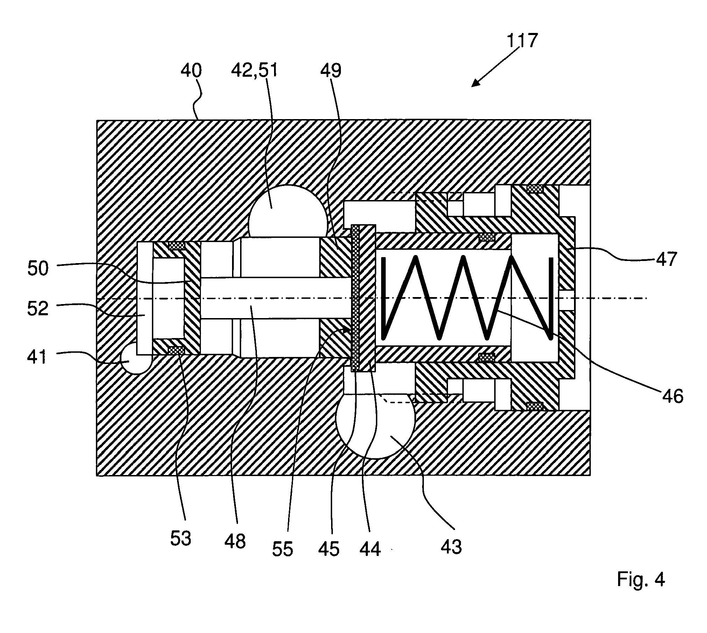

Die Figur 4 zeigt eine erste Ausführungsform eines Standsicherheitsventils 117. In einem Ventilgehäuse 40 ist ein Druckluft-Eingangsanschluss 43 vorgesehen, der mit dem ersten Überströmventil 113 bzw. dem federbelasteten Rückschlagventil 116 zu verbinden ist. Ferner ist ein Druckluft-Ausgangsanschluss 42 vorgesehen, der mit dem Parkbremsventil-Druckluftausgangsanschluss 23.1 der Druckluftversorgungseinrichtung 31 zu verbinden ist. Der Druckluft-Ausgangsanschluss 42 ist zugleich der zweite Druckluftsteuereingang 51. Ferner ist ein erster Druckluftsteuereingang 41 vorgesehen. Der erste Druckluftsteuereingang 41 ist mit einer Druckluftkammer 52 verbunden. Die Druckluftkammer 52 wird begrenzt von einem Steuerkolben 50, der über eine Dichtung 53 gegenüber dem Ventilgehäuse 40 abgedichtet ist. Der Steuerkolben 50 weist einen Stößel 48 auf, der zur Betätigung eines Ventilkörpers 44 eingerichtet ist. Der Stößel 48 ist mit dem Ventilkörper 44 nicht fest verbunden, sondern kann lediglich eine Betätigungskraft auf den Ventilkörper 44 entgegen der Kraft einer Rückstellfeder 46 aufbringen. Zur Halterung und Zentrierung des Stößels 48 ist ein Führungsglied 49 vorgesehen. Der Ventilkörper 44 stützt sich über eine Feder 46 an einem rückwärtigen Haltekörper 47 ab. Der Ventilkörper 44 weist ein Dichtungselement 45 auf, z. B. ein Elastomerteil, das mit einer ringförmigen Anlagefläche in dem Ventilgehäuse 40 zur Anlage kommt. In diesem Fall ist das Standsicherheitsventil 117 geschlossen, d. h. die Verbindung zwischen dem Druckluft-Eingangsanschluss 43 und dem Druckluft-Ausgangsanschluss 42 ist unterbrochen. Ein Druck am Druckluft-Eingangsanschluss 43 kann in dieser Schaltstellung das Standsicherheitsventils 117 nicht öffnen. Bei Druckluftbeaufschlagung der Steuerkammer 52 drückt der Steuerkolben 50 über den Stößel 48 den Ventilkörper 44 in Richtung des rückwärtigen Haltekörpers 47 entgegen der Kraft der Feder 46. Hierbei wird eine Verbindung zwischen dem Druckluft-Eingangsanschluss 43 und dem Druckluft-Ausgangsanschluss 42 freigegeben. Das Standsicherheitsventil 117 weist eine wirksame Betätigungsfläche 55 des Ventilkörpers 44 auf, die mit dem Druckluft-Ausgangsanschluss 42 in Verbindung steht. Im geöffneten Zustand des Standsicherheitsventils 117 wird diese Betätigungsfläche 55 von dem Druck am Druckluft-Ausgangsanschluss 42 beaufschlagt. Sofern ausreichender Druck vorhanden ist, wird das Standsicherheitsventil 117 offen gehalten.

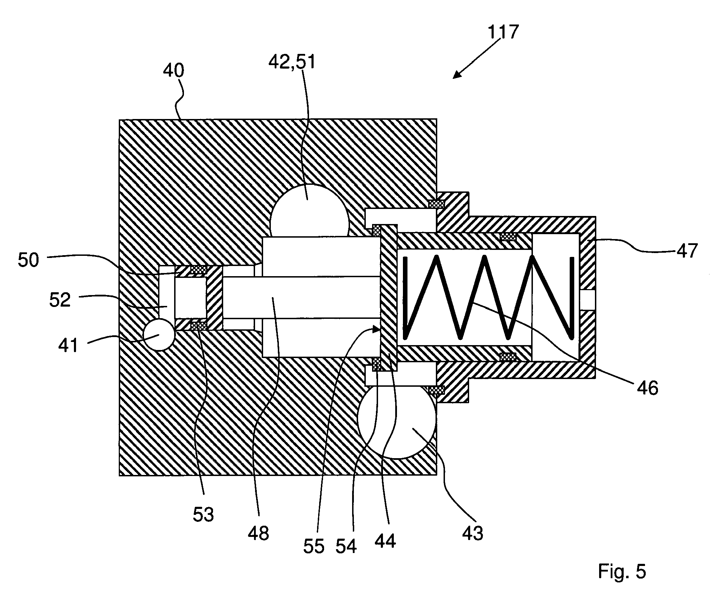

Die Figur 5 zeigt eine zweite Ausführungsform des Standsicherheitsventils 117, die bis auf die folgenden Unterschiede der zuvor anhand der Figur 4 erläuterten ersten Ausführungsform entspricht. Im Unterschied zu Figur 4 ist bei der Figur 5 vorgesehen, dass der Stößel 48 fest mit dem Ventilkörper 44 verbunden ist. Damit entfällt die Notwendigkeit für das Führungsglied 49. Entsprechend ist zur Abdichtung des Ventilkörpers 44 eine ringförmige Dichtung 54 vorgesehen.

## Patentansprüche

1. Druckluftversorgungseinrichtung (31) für eine Druckluftanlage eines Nutzfahrzeugs mit folgenden Merkmalen:
a) die Druckluftversorgungseinrichtung (31) weist wenigstens eine Mehrkreisschutzeinrichtung (200) und ein Standsicherheitsventil (117), durch das ein an die Druckluftversorgungseinrichtung (31) angeschlossenes Parkbremsventil (34) von einer Druckluftzufuhr absperrbar ist, auf,
b) das Standsicherheitsventil (117) ist über wenigstens einen ersten Druckluftsteuereingang (41) pneumatisch betätigbar,
c) die Mehrkreisschutzeinrichtung (200) weist wenigstens ein durch ein elektrisches Steuersignal steuerbares erstes Magnetventil (105, 106) auf, das zur pneumatischen Steuerung einer ersten Druckluftversorgungsfunktion der Druckluftanlage mittels eines von dem ersten Magnetventil (105, 106) an einem pneumatischen Druckluftausgang (121, 122) abgegebenen Drucksignals eingerichtet ist, wobei die erste Druckluftversorgungsfunktion nicht eine Standsicherheitsfunktion ist,
**dadurch gekennzeichnet, dass**
d) der erste Druckluftsteuereingang (41) des Standsicherheitsventils (117) mit dem pneumatischen Druckluftausgang (121, 122) des ersten Magnetventils (105, 106) der Mehrkreisschutzeinrichtung (200) verbunden ist.

2. Druckluftversorgungseinrichtung nach Anspruch 1, **dadurch gekennzeichnet, dass** die Mehrkreisschutzeinrichtung (200) wenigstens ein erstes Überströmventil (113) enthält und das Standsicherheitsventil (117) in einem Druckluftpfad zwischen dem ersten Überströmventil (113) und dem Parkbremsventil (34) angeordnet ist.

3. Druckluftversorgungseinrichtung nach Anspruch 2 mit folgenden Merkmalen:
a) die Mehrkreisschutzeinrichtung (200) weist wenigstens einen der folgenden Druckluftausgangsanschlüsse auf:
- erster Betriebsbremskreis-Druckluftausgangsanschluss (21), der zum Anschluss eines ersten Betriebsbremskreises (32) des Nutzfahrzeugs eingerichtet ist,
- zweiter Betriebsbremskreis-Druckluftausgangsanschluss (22), der zum Anschluss eines zweiten Betriebsbremskreises (32) des Nutzfahrzeugs eingerichtet ist,
- Anhänger-Druckluftausgangsanschluss (23), der zum Anschluss eines Druckluftkreises eines Anhängers des Nutzfahrzeugs eingerichtet ist,
b) wenigstens einer der Druckluftausgangsanschlüsse (21, 22, 23) ist über das in der Mehrkreisschutzeinrichtung (200) enthaltene erste Überströmventil (113), an das das Standsicherheitsventil (117) angeschlossen ist, mit einer Lufttrocknungseinrichtung (100) verbunden,
c) die Lufttrocknungseinrichtung (100) weist einen Druckluftzufuhranschluss (11) auf, der dazu eingerichtet ist, mit einem Druckluftkompressor (30) verbunden zu werden.

4. Druckluftversorgungseinrichtung nach einem der vorhergehenden Ansprüche, **dadurch gekennzeichnet, dass** das Standsicherheitsventil (117) an einem Anhänger-Druckluftausgangsanschluss (23), der zum Anschluss eines Druckluftkreises eines Anhängers des Nutzfahrzeugs eingerichtet ist, angeschlossen ist.

5. Druckluftversorgungseinrichtung nach einem der vorhergehenden Ansprüche, **dadurch gekennzeichnet, dass** das Standsicherheitsventil (117) als 2/2-Wegeventil oder 3/2-Wegeventil ausgebildet ist.

6. Druckluftversorgungseinrichtung nach einem der vorhergehenden Ansprüche, **dadurch gekennzeichnet, dass** das Standsicherheitsventil (117) bei pneumatischer Betätigung an dem ersten Druckluftsteuereingang (41) geöffnet ist oder geöffnet wird, wodurch ein Druckluft-Ausgangsanschluss (42) des Standsicherheitsventils (117) mit einem Druckluft-Eingangsanschluss (43) des Standsicherheitsventils (117) verbunden ist.

7. Druckluftversorgungseinrichtung nach einem der vorhergehenden Ansprüche, **dadurch gekennzeichnet, dass** das Standsicherheitsventil (117) über wenigstens einen zweiten Druckluftsteuereingang (51) pneumatisch betätigbar ist und der zweite Druckluftsteuereingang (51) zum Verbinden mit einer zum Parkbremsventil (34) führenden Druckluftleitung eingerichtet ist.

8. Druckluftversorgungseinrichtung nach Anspruch 7, **dadurch gekennzeichnet, dass** das Standsicherheitsventil (117) einen zum Anschließen des Parkbremsventils (34) vorgesehenen Druckluft-Ausgangsanschluss (42) aufweist, der zugleich der zweite Druckluftsteuereingang (51) ist.

9. Druckluftversorgungseinrichtung nach einem der vorhergehenden Ansprüche, **dadurch gekennzeichnet, dass** das erste Magnetventil (105, 106) zur Steuerung eines Druckluftkompressors oder zur Steuerung wenigstens eines Teils einer Regenerationsfunktion der Druckluftanlage eingerichtet ist.

10. Druckluftversorgungseinrichtung nach einem der Ansprüche 7 bis 9, **dadurch gekennzeichnet, dass** das Standsicherheitsventil (117) bei pneumatischer Betätigung an dem zweiten Druckluftsteuereingang (51) geöffnet ist oder geöffnet wird, wodurch ein Druckluft-Ausgangsanschluss (42) des Standsicherheitsventils (117) mit einem Druckluft-Eingangsanschluss (43) des Standsicherheitsventils (117) verbunden ist.

11. Druckluftversorgungseinrichtung nach einem der Ansprüche 7 bis 10, **dadurch gekennzeichnet, dass** das Standsicherheitsventil (117) bei Drucklosigkeit oder zu geringem Druck an dem ersten und dem zweiten Druckluftsteuereingang (41, 51) geschlossen ist oder geschlossen wird, wodurch ein Druckluft-Ausgangsanschluss (42) des Standsicherheitsventils (117) gegenüber einem Druckluft-Eingangsanschluss (43) des Standsicherheitsventils (117) abgesperrt ist.

12. Standsicherheitsventil (117) für eine Druckluftversorgungseinrichtung nach einem der vorhergehenden Ansprüche, wobei das Standsicherheitsventil (117) als 2/2-Wegeventil ausgebildet ist, wenigstens einen Druckluft-Eingangsanschluss (43), einen Druckluft-Ausgangsanschluss (42), einen ersten Druckluftsteuereingang (41) und optional einen zweiten Druckluftsteuereingang (51) aufweist, mit folgenden Merkmalen:
a) das Standsicherheitsventil (117) schließt selbsttätig bei Drucklosigkeit oder zu geringem Druck an seinen Druckluftsteuereingängen (41, 51) und am Druckluft-Ausgangsanschluss (42),
b) das Standsicherheitsventil (117) öffnet, wenn an wenigstens einem seiner Druckluftsteuereingänge (41, 51) oder am Druckluft-Ausgangsanschluss (42) ein Drucksignal anliegt,
c) das Standsicherheitsventil (117) öffnet nicht, wenn am Druckluft-Eingangsanschluss (43) ein Druck anliegt,
d) in geöffnetem Zustand des Standsicherheitsventils (117) ist der Druckluft-Ausgangsanschluss (42) mit dem Druckluft-Eingangsanschluss (43) verbunden,
e) in geschlossenem Zustand ist der Druckluft-Ausgangsanschluss (42) gegenüber dem Druckluft-Eingangsanschluss (43) abgesperrt.

13. Verfahren zur Steuerung einer Druckluftversorgungseinrichtung (31) einer Druckluftanlage eines Nutzfahrzeugs nach einem der Ansprüche 1 bis 11, **dadurch gekennzeichnet, dass** der erste Druckluftsteuereingang (41) des Standsicherheitsventils (117) durch das erste Magnetventil (105, 106) der Mehrkreisschutzeinrichtung (200) gesteuert wird.

14. Verfahren nach Anspruch 13, **dadurch gekennzeichnet, dass** der Druckluftkompressor (30) zusammen mit dem Standsicherheitsventil (117) ein Drucksignal erhält, wenn der Druck in dem ersten und/oder dem zweiten Betriebsbremskreis (32, 33) oberhalb eines Mindestwerts ist und anhand eines Fahrzeugsignals erkannt wird, dass sich eine Person am Fahrerarbeitsplatz aufhält, wobei durch das Drucksignal der Druckluftkompressor (30) abgeschaltet wird und das Standsicherheitsventil (117) auf Durchlass geschaltet wird, wobei ein ggf. zuvor durch den laufenden Druckluftkompressor (30) erzeugter Überdruck in der Druckluftanlage durch Aktivierung einer Regenerationsfunktion der Druckluftanlage abgebaut wird.

15. Verfahren nach Anspruch 13, **dadurch gekennzeichnet, dass** der Druckluftkompressor (30) zusammen mit dem Standsicherheitsventil (117) solange kein Drucksignal erhält, bis der Druck in dem ersten und/oder dem zweiten Betriebsbremskreis (32, 33) oberhalb eines Mindestwerts ist und anhand eines Fahrzeugsignals erkannt wird, dass sich eine Person am Fahrerarbeitsplatz aufhält, wobei durch das Drucksignal der Druckluftkompressor (30) abgeschaltet wird und das Standsicherheitsventil (117) auf Durchlass geschaltet wird, und ein ggf. durch den laufenden Druckluftkompressor (30) erzeugter Überdruck in der Druckluftanlage durch Aktivierung einer Regenerationsfunktion der Druckluftanlage abgebaut wird.

16. Verfahren nach Anspruch 13, **dadurch gekennzeichnet, dass** eine Regenerationseinrichtung (102) zusammen mit dem Standsicherheitsventil (117) ein Drucksignal erhält, wenn der Druck in dem ersten und/oder dem zweiten Betriebsbremskreis (32, 33) oberhalb eines Mindestwerts ist und anhand eines Fahrzeugsignals erkannt wird, dass sich eine Person am Fahrerarbeitsplatz aufhält, wobei durch das Drucksignal wenigstens ein Teil einer Regenerationsfunktion der Druckluftanlage aktiviert wird und das Standsicherheitsventil (117) auf Durchlass geschaltet wird.

17. Verfahren nach Anspruch 13, **dadurch gekennzeichnet, dass** eine Regenerationseinrichtung (102) zusammen mit dem Standsicherheitsventil (117) solange kein Drucksignal erhält, bis der Druck in dem ersten und/oder dem zweiten Betriebsbremskreis (32, 33) oberhalb eines Mindestwerts ist und anhand eines Fahrzeugsignals erkannt wird, dass sich eine Person am Fahrerarbeitsplatz aufhält, wobei durch das Drucksignal wenigstens ein Teil einer Regenerationsfunktion der Druckluftanlage aktiviert wird und das Standsicherheitsventil (117) auf Durchlass geschaltet wird.

## Claims

1. Compressed-air supply device (31) for a compressed-air system of a utility vehicle, having the following features:
a) the compressed-air supply device (31) has at least one multi-circuit protection device (200) and has a standstill safety valve (117) by means of which a parking brake valve (34) connected to the compressed-air supply device (31) can be shut off from a compressed-air supply,
b) the standstill safety valve (117) can be pneumatically actuated by way of at least one first compressed-air control inlet (41),
c) the multi-circuit protection device (200) has at least one first solenoid valve (105, 106) which can be controlled by an electrical control signal and which is designed for pneumatically controlling a first compressed-air supply function of the compressed-air system by means of a pressure signal output by the first solenoid valve (105, 106) at a pneumatic compressed-air outlet (121, 122), wherein the first compressed-air supply function is not a standstill safety function,
**characterized in that**
d) the first compressed-air control inlet (41) of the standstill safety valve (117) is connected to the pneumatic compressed-air outlet (121, 122) of the first solenoid valve (105, 106) of the multi-circuit protection device (200).

2. Compressed-air supply device according to Claim 1, **characterized in that** the multi-circuit protection device (200) comprises at least one first overflow valve (113), and the standstill safety valve (117) is arranged in a compressed-air path between the first overflow valve (113) and the parking brake valve (34).

3. Compressed-air supply device according to Claim 2, having the following features:
a) the multi-circuit protection device (200) has at least one of the following compressed-air outlet ports:
- first service brake circuit compressed-air outlet port (21), which is designed for the connection of a first service brake circuit (32) of the utility vehicle,
- second service brake circuit compressed-air outlet port (22), which is designed for the connection of a second service brake circuit (32) of the utility vehicle,
- trailer compressed-air outlet port (23) which is designed for the connection of a compressed-air circuit of a trailer of the utility vehicle,
b) at least one of the compressed-air outlet ports (21, 22, 23) is connected, via the first overflow valve (113) which is comprised in the multi-circuit protection device (200) and to which the standstill safety valve (117) is connected, to an air drying device (100),
c) the air drying device (100) has a compressed-air supply port (11) which is designed for being connected to a compressed-air compressor (30).

4. Compressed-air supply device according to one of the preceding claims, **characterized in that** the standstill safety valve (117) is connected to a trailer compressed-air outlet port (23) which is designed for the connection of a compressed-air circuit of a trailer of the utility vehicle.

5. Compressed-air supply device according to one of the preceding claims, **characterized in that** the standstill safety valve (117) is in the form of a 2/2 directional valve or 3/2 directional valve.

6. Compressed-air supply device according to one of the preceding claims, **characterized in that** the standstill safety valve (117), upon pneumatic actuation at the first compressed-air control inlet (41), is in or placed into an open state, whereby a compressed-air outlet port (42) of the standstill safety valve (117) is connected to a compressed-air inlet port (43) of the standstill safety valve (117).

7. Compressed-air supply device according to one of the preceding claims, **characterized in that** the standstill safety valve (117) can be pneumatically actuated by way of at least one second compressed-air control inlet (51) and the second compressed-air control inlet (51) is designed for being connected to a compressed-air line leading to the parking brake valve (34).

8. Compressed-air supply device according to Claim 7, **characterized in that** the standstill safety valve (117) has a compressed-air outlet port (42) which is provided for the connection of the parking brake valve (34) and which is at the same time the second compressed-air control inlet (51).

9. Compressed-air supply device according to one of the preceding claims, **characterized in that** the first solenoid valve (105, 106) is designed for controlling a compressed-air compressor or for controlling at least a part of a regeneration function of the compressed-air system.

10. Compressed-air supply device according to one of Claims 7 to 9, **characterized in that** the standstill safety valve (117), upon pneumatic actuation at the second compressed-air control inlet (51), is in or placed into an open state, whereby a compressed-air outlet port (42) of the standstill safety valve (117) is connected to a compressed-air inlet port (43) of the standstill safety valve (117).

11. Compressed-air supply device according to one of Claims 7 to 10, **characterized in that** the standstill safety valve (117), when no pressure or an excessively low pressure prevails at the first and the second compressed-air control inlet (41, 51), is in or placed into a closed state, whereby a compressed-air outlet port (42) of the standstill safety valve (117) is shut off with respect to a compressed-air inlet port (43) of the standstill safety valve (117).

12. Standstill safety valve (117) for a compressed-air supply device according to one of the preceding claims, wherein the standstill safety valve (117) is in the form of a 2/2 directional valve and has at least a compressed-air inlet port (43), a compressed-air outlet port (42), a first compressed-air control inlet (41) and optionally a second compressed-air control inlet (51), having the following features:
a) the standstill safety valve (117) automatically closes when no pressure or an excessively low pressure prevails at its compressed-air control inlets (41, 51) and at the compressed-air outlet port (42),
b) the standstill safety valve (117) opens when a pressure signal prevails at at least one of its compressed-air control inlets (41, 51) or at the compressed-air outlet port (42),
c) the standstill safety valve (117) does not open when a pressure prevails at the compressed-air inlet port (43),
d) in the open state of the safety valve (117), the compressed-air outlet port (42) is connected to the compressed-air inlet port (43),
e) in the closed state, the compressed-air outlet port (42) is shut off with respect to the compressed-air inlet port (43).

13. Method for controlling a compressed-air supply device (31) of a compressed-air system of a utility vehicle according to one of Claims 1 to 11, **characterized in that** the first compressed-air control inlet (41) of the standstill safety valve (117) is controlled by means of the first solenoid valve (105, 106) of the multi-circuit protection device (200).

14. Method according to Claim 13, **characterized in that** the compressed-air compressor (30) together with the standstill safety valve (117) receives a pressure signal when the pressure in the first and/or the second service brake circuit (32, 33) is above a minimum value and, on the basis of a vehicle signal, it is identified that a person is present at the driver's workplace, wherein the pressure signal causes the compressed-air compressor (30) to be deactivated and the standstill safety valve (117) to be switched into a pass-through position, wherein a positive pressure possibly generated previously in the compressed-air system by the running compressed-air compressor (30) is depleted by activation of a regeneration function of the compressed-air system.

15. Method according to Claim 13, **characterized in that** the compressed-air compressor (30) together with the standstill safety valve (117) receives no pressure signal until the pressure in the first and/or the second service brake circuit (32, 33) is above a minimum value and, on the basis of a vehicle signal, it is identified that a person is present at the driver's workplace, wherein the pressure signal causes the compressed-air compressor (30) to be deactivated and the standstill safety valve (117) to be switched into a pass-through position, and a positive pressure possibly generated in the compressed-air system by the running compressed-air compressor (30) is depleted by activation of a regeneration function of the compressed-air system.

16. Method according to Claim 13, **characterized in that** a regeneration device (102) together with the standstill safety valve (117) receives a pressure signal when the pressure in the first and/or the second service brake circuit (32, 33) is above a minimum value and, on the basis of a vehicle signal, it is identified that a person is present at the driver's workplace, wherein the pressure signal causes at least a part of a regeneration function of the compressed-air system to be activated and the standstill safety valve (117) to be switched into a pass-through position.

17. Method according to Claim 13, **characterized in that** a regeneration device (102) together with the standstill safety valve (117) receives no pressure signal until the pressure in the first and/or the second service brake circuit (32, 33) is above a minimum value and, on the basis of a vehicle signal, it is identified that a person is present at the driver's workplace, wherein the pressure signal causes at least a part of a regeneration function of the compressed-air system to be activated and the standstill safety valve (117) to be switched into a pass-through position.

## Revendications

1. Dispositif d'alimentation en air comprimé (31) pour une installation d'air comprimé d'un véhicule utilitaire, comprenant les caractéristiques suivantes :
a) le dispositif d'alimentation en air comprimé (31) présente au moins un dispositif de protection contre les circuits multiples (200) et une soupape de sécurité d'état (117), par le biais de laquelle une soupape de frein de stationnement (34) raccordée au dispositif d'alimentation en air comprimé (31) peut être bloquée vis-à-vis d'une alimentation en air comprimé,
b) la soupape de sécurité d'état (117) peut être actionnée pneumatiquement par le biais d'au moins une première entrée de commande d'air comprimé (41),
c) le dispositif de protection contre les circuits multiples (200) présente au moins une première soupape magnétique (105, 106) pouvant être commandée par un signal de commande électrique, laquelle est prévue pour réaliser une commande pneumatique d'une première fonction d'alimentation en air comprimé de l'installation d'air comprimé au moyen d'un signal de pression délivré par la première soupape magnétique (105, 106) à une sortie d'air comprimé pneumatique (121, 122), la première fonction d'alimentation en air comprimé n'étant pas une fonction de sécurité d'état,
**caractérisé en ce que**
d) la première entrée de commande d'air comprimé (41) de la soupape de sécurité d'état (117) est connectée à la sortie d'air comprimé pneumatique (121, 122) de la première soupape magnétique (105, 106) du dispositif de protection contre les circuits multiples (200).

2. Dispositif d'alimentation en air comprimé selon la revendication 1, **caractérisé en ce que** le dispositif de protection contre les circuits multiples (200) contient au moins une première soupape de débordement (113) et la soupape de sécurité d'état (117) est disposée dans un chemin d'air comprimé entre la première soupape de débordement (113) et la soupape de frein de stationnement (34).

3. Dispositif d'alimentation en air comprimé selon la revendication 2, comprenant les caractéristiques suivantes :
a) le dispositif de protection contre les circuits multiples (200) présente au moins l'un des raccords de sortie d'air comprimé suivants :
- un premier raccord de sortie d'air comprimé de circuit de frein de service (21), qui est prévu pour le raccordement d'un premier circuit de frein de service (32) du véhicule utilitaire,
- un deuxième raccord de sortie d'air comprimé de circuit de frein de service (22) qui est prévu pour le raccordement d'un deuxième circuit de frein de service (32) du véhicule utilitaire,
- un raccord de sortie d'air comprimé de remorque (23), qui est prévu pour le raccordement d'un circuit d'air comprimé d'une remorque du véhicule utilitaire,
b) au moins l'un des raccords de sortie d'air comprimé (21, 22, 23) est connecté, par le biais de la première soupape de débordement (113) incorporée dans le dispositif de protection contre les circuits multiples (200), à laquelle est raccordée la soupape de sécurité d'état (117), à un dispositif de séchage d'air (100),
c) le dispositif de séchage d'air (100) présente un raccord d'alimentation en air comprimé (11) qui est prévu pour être connecté à un compresseur d'air comprimé (30).

4. Dispositif d'alimentation en air comprimé selon l'une quelconque des revendications précédentes, **caractérisé en ce que** la soupape de sécurité d'état (117) est raccordée à un raccord de sortie d'air comprimé de remorque (23), qui est prévu pour le raccordement d'un circuit d'air comprimé d'une remorque du véhicule utilitaire.

5. Dispositif d'alimentation en air comprimé selon l'une quelconque des revendications précédentes, **caractérisé en ce que** la soupape de sécurité d'état (117) est réalisée sous forme de soupape à 2/2 voies ou sous forme de soupape à 3/2 voies.

6. Dispositif d'alimentation en air comprimé selon l'une quelconque des revendications précédentes, **caractérisé en ce que** la soupape de sécurité d'état (117) est ouverte ou sera ouverte lors d'un actionnement pneumatique au niveau de la première entrée de commande d'air comprimé (41), de sorte qu'un raccord de sortie d'air comprimé (42) de la soupape de sécurité d'état (117) soit connecté à un raccord d'entrée d'air comprimé (43) de la soupape de sécurité d'état (117).

7. Dispositif d'alimentation en air comprimé selon l'une quelconque des revendications précédentes, **caractérisé en ce que** la soupape de sécurité d'état (117) peut être actionnée pneumatiquement par le biais d'au moins une deuxième entrée de commande d'air comprimé (51) et la deuxième entrée de commande d'air comprimé (51) est prévue pour la connexion à une conduite d'air comprimé conduisant à la soupape de frein de stationnement (34).

8. Dispositif d'alimentation en air comprimé selon la revendication 7, **caractérisé en ce que** la soupape de sécurité d'état (117) présente un raccord de sortie d'air comprimé (42) prévu pour le raccordement de la soupape de frein de stationnement (34), lequel est en même temps la deuxième entrée de commande d'air comprimé (51).

9. Dispositif d'alimentation en air comprimé selon l'une quelconque des revendications précédentes, **caractérisé en ce que** la première soupape magnétique (105, 106) est prévue pour commander un compresseur d'air comprimé ou pour commander au moins une partie d'une fonction de régénération de l'installation d'air comprimé.

10. Dispositif d'alimentation en air comprimé selon l'une quelconque des revendications 7 à 9, **caractérisé en ce que** la soupape de sécurité d'état (117) est ouverte ou sera ouverte lors d'un actionnement pneumatique au niveau de la deuxième entrée de commande d'air comprimé (51), de sorte qu'un raccord de sortie d'air comprimé (42) de la soupape de sécurité d'état (117) soit connecté à un raccord d'entrée d'air comprimé (43) de la soupape de sécurité d'état (117).

11. Dispositif d'alimentation en air comprimé selon l'une quelconque des revendications 7 à 10, **caractérisé en ce que** la soupape de sécurité d'état (117) est fermée ou sera fermée en cas d'absence de pression ou de pression insuffisante au niveau de la première et de la deuxième entrée de commande d'air comprimé (41, 51), de sorte qu'un raccord de sortie d'air comprimé (42) de la soupape de sécurité d'état (117) soit bloqué par rapport à un raccord d'entrée d'air comprimé (43) de la soupape de sécurité d'état (117).

12. Soupape de sécurité d'état (117) pour un dispositif d'alimentation en air comprimé selon l'une quelconque des revendications précédentes, dans laquelle la soupape de sécurité d'état (117) est réalisée sous forme de soupape à 2/2 voies, présente au moins un raccord d'entrée d'air comprimé (43), un raccord de sortie d'air comprimé (42), une première entrée de commande d'air comprimé (41) et, en option, une deuxième entrée de commande d'air comprimé (51), comprenant les caractéristiques suivantes :
a) la soupape de sécurité d'état (117) se ferme automatiquement en cas d'absence de pression ou de pression insuffisante au niveau de ses entrées de commande d'air comprimé (41, 51) et au niveau du raccord de sortie d'air comprimé (42),
b) la soupape de sécurité d'état (117) s'ouvre lorsqu'un signal de pression s'applique au niveau d'au moins l'une de ses entrées de commande d'air comprimé (41, 51) ou au niveau du raccord de sortie d'air comprimé (42),
c) la soupape de sécurité d'état (117) ne s'ouvre pas lorsqu'une pression s'applique au niveau du raccord d'entrée d'air comprimé (43),
d) dans l'état ouvert de la soupape de sécurité d'état (117), le raccord de sortie d'air comprimé (42) est connecté au raccord d'entrée d'air comprimé (43),
e) dans l'état fermé, le raccord de sortie d'air comprimé (42) est bloqué par rapport au raccord d'entrée d'air comprimé (43).

13. Procédé de commande d'un dispositif d'alimentation en air comprimé (31) d'une installation d'air comprimé d'un véhicule utilitaire selon l'une quelconque des revendications 1 à 11, **caractérisé en ce que** la première entrée de commande d'air comprimé (41) de la soupape de sécurité d'état (117) est commandée par la première soupape magnétique (105, 106) du dispositif de protection contre les circuits multiples (200).

14. Procédé selon la revendication 13, **caractérisé en ce que** le compresseur d'air comprimé (30) conjointement avec la soupape de sécurité d'état (117) reçoit un signal de pression lorsque la pression dans le premier et/ou le deuxième circuit de frein de service (32, 33) est au-dessus d'une valeur minimale et que l'on détecte, à l'aide d'un signal du véhicule, qu'une personne se trouve au poste de conduite, par le biais du signal de pression, le compresseur d'air comprimé (30) étant coupé et la soupape de sécurité d'état (117) étant commutée de manière à permettre le passage, une surpression dans l'installation d'air comprimé, éventuellement produite préalablement par le compresseur d'air comprimé (30) en fonctionnement, étant réduite par l'activation d'une fonction de régénération de l'installation d'air comprimé.

15. Procédé selon la revendication 13, **caractérisé en ce que** le compresseur d'air comprimé (30), conjointement avec la soupape de sécurité d'état (117), ne reçoit aucun signal de pression tant que la pression dans le premier et/ou le deuxième circuit de frein de service (32, 33) n'est pas au-dessus d'une valeur minimale et que l'on détecte à l'aide d'un signal du véhicule qu'une personne se trouve au poste de conduite, par le biais du signal de pression, le compresseur d'air comprimé (30) étant coupé et la soupape de sécurité d'état (117) étant commutée de manière à permettre le passage, et une surpression dans l'installation d'air comprimé, éventuellement produite par le compresseur d'air comprimé (30) en fonctionnement, étant réduite par l'activation d'une fonction de régénération de l'installation d'air comprimé.

16. Procédé selon la revendication 13, **caractérisé en ce qu'**un dispositif de régénération (102), conjointement avec la soupape de sécurité d'état (117), reçoit un signal de pression lorsque la pression dans le premier et/ou dans le deuxième circuit de frein de service (32, 33) est au-dessus d'une valeur minimale et que l'on détecte, à l'aide d'un signal du véhicule, qu'une personne se trouve au poste de conduite, par le biais du signal de pression, au moins une partie d'une fonction de régénération de l'installation d'air comprimé étant activée et la soupape de sécurité d'état (117) étant commutée de manière à permettre le passage.

17. Procédé selon la revendication 13, **caractérisé en ce qu'**un dispositif de régénération (102), conjointement avec la soupape de sécurité d'état (117), ne reçoit aucun signal de pression tant que la pression dans le premier et/ou le deuxième circuit de frein de service (32, 33) n'est pas au-dessus d'une valeur minimale et que l'on détecte à l'aide d'un signal du véhicule qu'une personne se trouve au poste de conduite, par le biais du signal de pression, au moins une partie d'une fonction de régénération de l'installation d'air comprimé étant activée et la soupape de sécurité d'état (117) étant commutée de manière à permettre le passage.
